(19) **Europäisches Patentamt / European Patent Office / Office européen des brevets**

(11) **EP 4 541 830 A1**

(12) **EUROPÄISCHE PATENTANMELDUNG**

(43) Veröffentlichungstag:
23.04.2025 Patentblatt 2025/17

(21) Anmeldenummer: 23204525.2

(22) Anmeldetag: **19.10.2023**

(51) Internationale Patentklassifikation (IPC):
*C08G 18/18* (2006.01)   *C08G 18/32* (2006.01)
*C08G 18/48* (2006.01)   *C08G 18/66* (2006.01)
*C08G 18/76* (2006.01)   *C08K 5/42* (2006.01)

(52) Gemeinsame Patentklassifikation (CPC):
(C-Sets verfügbar)
**C08G 18/4829; C08G 18/1825; C08G 18/3278;
C08G 18/4816; C08G 18/4833; C08G 18/6688;
C08G 18/7664; C08K 5/42;** C08G 2110/0083

(Forts.)

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Covestro Deutschland AG**
**51373 Leverkusen (DE)**

(72) Erfinder:
• **Albach, Rolf**
**51061 Köln (DE)**
• **Lerch, Swantje**
**40233 Düsseldorf (DE)**
• **Venner, Petra**
**51371 Leverkusen (DE)**

(74) Vertreter: **Levpat**
**c/o Covestro AG**
**Gebäude K12**
**51365 Leverkusen (DE)**

(54) **VERFAHREN ZUR HERSTELLUNG EINES POLYURETHANSCHAUMSTOFFS**

(57) Die vorliegende Erfindung betrifft ein Verfahren zur Herstellung eines Polyurethanschaumstoffs unter Verwendung einer speziellen Verbindung mit aktivierter Methylengruppe, eine Reaktionsmischung enthaltend die spezielle Verbindung mit aktivierter Methylengruppe, eines Polyurethanschaumstoffs erhältlich nach dem erfindungsgemäßen Verfahren sowie die Verwendung dieses Polyurethanschaumstoffs für spezifische Anwendungen.

**EP 4 541 830 A1**

Processed by Luminess, 75001 PARIS (FR)

(52) Gemeinsame Patentklassifikation (CPC): (Forts.)

C-Sets
**C08K 5/42, C08L 75/08**

# EP 4 541 830 A1

**Beschreibung**

Die vorliegende Erfindung betrifft ein Verfahren zur Herstellung eines Polyurethanschaumstoffs unter Verwendung einer speziellen Verbindung mit aktivierter Methylengruppe, eine Reaktionsmischung enthaltend die spezielle Verbindung mit aktivierter Methylengruppe, eines Polyurethanschaumstoffs erhältlich nach dem erfindungsgemäßen Verfahren sowie die Verwendung dieses Polyurethanschaumstoffs für spezifische Anwendungen.

Es ist bekannt, dass in Polyurethanen durch Folgereaktionen die unerwünschte Bildung und Emission von Formaldehyd, Acetaldehyd, Propanal und deren Aldolkondensate wie Acrolein, 2-Methylacrolein, Crotonal, 2-Methylbutenal und 2-Methyl-2-pentenal stattfindet. Diese Verbindungen sind zum Teil als bedenklich für die Gesundheit eingestuft. Für die zulässigen Emissionen gibt es deshalb standardisierte Messmethoden wie zum Beispiel die vom Verband der Automobilindustrie entwickelten Methoden VDA275 und VDA276 Normen ISO 12219-1ff. Zusätzlich gibt es Messmethoden und Grenzwerte verschiedenster Organisationen für die Emission dieser Verbindungen, welche über die Zeit immer weiter abgesenkt wurden. Beispielhaft seien die in China gültige Norm GB/T27630-2011 oder die Notification 2007-539 (Korea) genannt. Es ist deshalb notwendig, eine möglichst große Vielfalt an Additive zu finden, die zu einer Verringerung der Emissionen von Aldehyden führen, um ein Maximum an Freiheit bei der Rezepturgestaltung zu haben. Eine Klasse von Verbindungen, die als Additiv diesen Ansprüchen entspricht, sind C-H-acide Verbindungen vom Typ Z1-CHR-Z2, bei denen die Reste Z elektronenziehende Gruppen sind.

In WO 2015/082316 A1 wird ein Verfahren zur Herstellung von Polyurethanen durch Umsetzung eines Polyisocyanats mit einer polymeren Verbindung mit gegenüber Isocyanaten reaktiven Gruppen in Gegenwart eines Katalysators sowie verschiedener spezifischer CH-acider Verbindungen Formel: $R^1$-CH2-$R^2$ offenbart, wobei im Speziellen Cyanacetamid ($R^1$ = CN, $R^2$ = CONH$_2$) zu geringen Formaldehydemissionen führt. Auch in den in EP 2 138 520 A1 sowie WO 2017/134296 A1 offenbarten Herstellungsverfahren von Polyurethanschäumen führt die Verwendung von Cyanacetamid zu geringeren Formaldehydemissionen bzw. auch teilweise geringeren Acetaldehydemissionen.

Die Aufgabenstellung ist somit die Bereitstellung von Additiven zur Herstellung von Polyurethanen mit guten mechanischen Eigenschaften, die die Emission von Aldehyden speziell von Formaldehyd aber auch Acrolein zu reduzieren und gleichzeitig dazu geeignet sind, die mechanischen Eigenschaften nicht nachteilig beeinflussen. Im Speziellen soll auch ein geringerer Druckverformungsrest 75%/22h/70°C, nach DIN EN ISO 1856 in der Fassung von Januar 2008 mit 75% Druckverformung bei 70°C für 22h gemessen (Verfahren A), für den Polyurethanschaum unter Einsatz einer gegenüber Stand der Technik verringerten Menge an Additiv erzielt werden.

Gegenstand der vorliegenden Erfindung ist ein Verfahren zur Herstellung von Polyurethanschaumstoffen durch Umsetzung der Komponenten

    **A** enthaltend

        **A1** mindestens einer Verbindung mit gegenüber Isocyanaten reaktionsfähigen Wasserstoffatomen
        **A2** halogenfreies Treibmittel
    und gegebenenfalls
        **A3** Hilfs- und Zusatzstoffe wie

            a) Katalysatoren,
            b) oberflächenaktive Zusatzstoffe,
            c) Pigmente und/oder halogenfreie Flammschutzmittel,

    mit
    **B** mindestens einem Di- und/oder Polyisocyanat, bevorzugt einem aromatischen Di- und/oder Polyisocyanat, und
    **C** mindestens einer Verbindung mit aktivierter Methylengruppe, wobei diese eine Struktur gemäß Formel (I) aufweist:

$$R^1\text{-CH(1)H(2)-}R^2 \qquad \text{(I),}$$

    mit

        H(1), H(2) aktivierte Protonen der Verbindung mit aktivierter Methylengruppe sind,
        $R^1$ und/oder $R^2$ organische oder anorganische Gruppe enthaltend eine Atom-Sauerstoff-Doppelbindung und/oder Atom-Stickstoff-Doppelbindung und/oder Atom-Stickstoff-Dreifachbindung, bevorzugt eine Atom-Sauerstoff-Doppelbindung, welche mit den Protonen H(1), H(2) eine enolisierbare Gruppe bilden,

    wobei das aktivierte Proton (H1) und/oder das aktivierte Proton (H2) eine Protonenverschiebung in der $^1$H-Kern-

resonanz-Spektroskopie von 3,9 ppm bis 4,8 ppm, bevorzugt von 4,0 ppm bis 4,7 ppm, und besonders bevorzugt von 4,1 ppm bis 4,5 ppm aufweist, wobei die Protonenverschiebung in der $^1$H-Kernresonanz-Spektroskopie gegen Tetramethylsilan als Standard bei 20 °C in einer 5 Gew.-% Lösung in deuteriertem Chloroform ($CDCl_3$) gemessen wurde.

Hierbei ist unter einer enolisierbaren Gruppe gemäß dem allgemeinen Fachwissen eine funktionelle Gruppe zu verstehen, welche ein tautomeres System bilden bzw. als prototrope Tautomere vorliegen. Beispiele für enolisierbare Gruppen sind β-Ketoester, welche ein Gleichgewicht aus einer Enol und einer Keto-Form bestehen. Die organische oder anorganische Gruppe enthaltend eine Atom-Sauerstoff Doppelbindung kann dabei beispielsweise eine Carbonylgruppe (Keto-Gruppen) mit einer Kohlenstoff-Sauerstoff Doppelbindung aber auch eine Sulfinylgruppe oder eine Sulfonylgruppe mit einer Schwefel-Sauerstoff Doppelbindung oder eine Phosphonylgruppe mit einer Phosphor-Sauerstoff Doppelbindung sein.

Ebenfalls ist Verfahren zur Herstellung von Polyurethanschaumstoffen durch Umsetzung der Komponenten

**A** enthaltend

**A1** mindestens einer Verbindung mit gegenüber Isocyanaten reaktionsfähigen Wasserstoffatomen
**A2** halogenfreies Treibmittel
und gegebenenfalls
**A3** Hilfs- und Zusatzstoffe wie

a) Katalysatoren,
b) oberflächenaktive Zusatzstoffe,
c) Pigmente und/oder halogenfreie Flammschutzmittel,

mit
**B** mindestens einem Di- und/oder Polyisocyanat, bevorzugt einem aromatischen Di- und/oder Polyisocyanat, und
**C** mindestens einer Verbindung mit aktivierter Methylengruppe, wobei diese eine Struktur gemäß Formel (I) aufweist:

$$R^1\text{-CH(1)H(2)}\text{-}R^2 \qquad (I),$$

mit

$R^1$ $S(O)_n$-$R^3$ ist

mit n = 1 oder 2;
$R^3$ eine substituierte Alkylgruppe, eine unsubstituierte Alkylgruppe, eine substituierte Arylgruppe oder unsubstituierte Arylgruppe, bevorzugt eine unsubstituierte oder substituierte Alkylgruppe,

$R^2$ -$NO_2$, -CN, -P(O)$R^4R^5$, -P(O)(O$R^4$)$R^5$, -P(O)(O$R^4$)(O$R^5$), -C(O)-O$R^6$, -C(O)-N$R^7R^8$, -C(O)-N$R^9$-N$R^{10}R^{11}$, -C(O)-N$R^{12}$-O$R^{13}$, -C(O)$R^{14}$ oder identisch mit $R^1$, bevorzugt - CN,

$R^4$, $R^5$, $R^6$, $R^{14}$ jeweils unabhängig voneinander eine substituierte oder unsubstituierte Alkylgruppe oder eine substituierte oder unsubstituierte Arylgruppe, bevorzugt eine unsubstituierte oder substituierte Alkylgruppe,
$R^7$, $R^8$, $R^9$, $R^{10}$, $R^{11}$, $R^{12}$, $R^{13}$ jeweils unabhängig voneinander Wasserstoff, eine substituierte oder unsubstituierte Alkylgruppe oder eine substituierte oder unsubstituierte Arylgruppe, bevorzugt eine unsubstituierte Alkylgruppe Gegenstand der vorliegenden Erfindung.

**Komponente A1**

Als Verbindungen mit gegenüber Isocyanat reaktionsfähigen Wasserstoffatomen können beispielsweise Polyole ausgewählt aus der Gruppe bestehend aus Polyetherpolyolen, Polyesterpolyolen, Polyetheresterpolyolen, Polycarbonatpolyolen und Polyether-Polycarbonatpolyolen eingesetzt werden. Bevorzugt sind Polyesterpolyole und/oder Polyetherpolyole.

In einer Ausführungsform des erfindungsgemäßen Verfahrens sind mindestens 50 Gew.-% , bevorzugt mindestens 75 Gew.-%, der Verbindung mit gegenüber Isocyanaten reaktionsfähigen Wasserstoffatomen der Komponente **A1** ein Polymer im Sinne der Verordnung EG 1907/2006 Artikel 3 Nr. 5.

Die Verbindungen der Komponente **A1** können eine Amin- und/oder Hydroxylzahl zwischen 15 bis 4000 mg KOH/g und eine Funktionalität von 1 bis 8 aufweisen. Vorzugsweise weisen die Verbindungen der Komponente **A1** ein zahlenmittleres Molekulargewicht von 2000 g/mol bis 15000 g/mol, insbesondere 3000 g/mol bis 12000 g/mol und besonders bevorzugt 3500 g/mol bis 6500 g/mol auf. Werden mehr als nur eine Verbindung der Komponente **A1** verwendet, kann die Mischung aus Verbindungen der Komponente **A1** bevorzugt eine Hydroxylzahl zwischen 20 bis 200 mg KOH/g, insbesondere 25 bis 100 mg KOH/g aufweisen.

"Funktionalität" bezeichnet im Rahmen der vorliegenden Erfindung die theoretische, aus den bekannten Einsatzstoffen und deren Mengenverhältnissen berechnete mittlere Funktionalität (Anzahl an gegenüber Isocyanaten bzw. gegenüber Polyolen reaktiven Funktionen im Molekül).

Die zahlenmittlere Molmasse $M_n$ (auch: Molekulargewicht) wird im Rahmen dieser Erfindung durch Gelpermeationschromatographie nach DIN 55672-1 (August 2007) bestimmt.

Die Polyesterpolyole der Komponente **A1** können beispielsweise Polykondensate aus mehrwertigen Alkoholen, vorzugsweise Diolen, mit 2 bis 12 Kohlenstoffatomen, vorzugsweise mit 2 bis 6 Kohlenstoffatomen, und Polycarbonsäuren, wie z. B. Di-, Tri- oder sogar Tetracarbonsäuren oder Hydroxycarbonsäuren oder Lactonen sein, bevorzugt werden aromatische Dicarbonsäuren oder Gemische aus aromatischen und aliphatischen Dicarbonsäuren verwendet. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Als Carbonsäuren kommen insbesondere in Betracht: Bernsteinsäure, Glutarsäure, Adipinsäure, Korksäure, Azelainsäure, Sebacinsäure, Decandicarbonsäure, Tetrahydrophthalsäure, Hexahydrophthalsäure, Cyclohexandicarbonsäure, Tetrachlorphthalsäure, Itaconsäure, Malonsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, , Hydroxybenzoesäure, Ferulasäure, Trimellithsäure, Benzoesäure, Maleinsäure, Fumarsäure, Phthalsäure, Isophthalsäure und Terephthalsäure. Verwendet werden können ebenso Derivate dieser Carbonsäuren, wie beispielsweise Dimethylterephthalat. Die Carbonsäuren können dabei sowohl einzeln als auch im Gemisch verwendet werden. Als Carbonsäuren werden bevorzugt Adipinsäure, Sebacinsäure und/oder Bernsteinsäure, besonders bevorzugt Adipinsäure und/oder Bernsteinsäure, verwendet.

Hydroxycarbonsäuren, die als Reaktionsteilnehmer bei der Herstellung eines Polyesterpolyols mit endständigen Hydroxylgruppen mitverwendet werden können, sind beispielsweise Milchsäure, Äpfelsäure, Hydroxycapronsäure, Hydroxybuttersäure, Hydroxydecansäure, Hydroxystearinsäure, Rizinolsäure und dergleichen. Geeignete Lactone sind unter anderem Caprolacton, Butyrolacton und Homologe.

Zur Herstellung der Polyesterpolyole kommen insbesondere auch biobasierte Ausgangsstoffe und/oder deren Derivate in Frage, wie z. B. Rizinusöl, Polyhydroxyfettsäuren, Ricinolsäure, Hydroxyl-modifizierte Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, hydroxylmodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure. Insbesondere bevorzugt sind Ester der Rizinolsäure mit mehrfunktionellen Alkoholen, z.B. Glycerin. Bevorzugt ist auch die Verwendung von Mischungen solcher biobasierten Säuren mit anderen Carbonsäuren, z.B. Phthalsäuren.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,4-Butandiol, 1,6-Hexandiol und Isomere, Neopentylglykol oder Hydroxypivalinsäureneopentylglykolester. Vorzugsweise verwendet werden Ethylenglykol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol.

Daneben können auch Polyole wie Trimethylolpropan, Glycerin, Erythrit, Pentaerythrit, Trimethylolbenzol oder Trishydroxyethylisocyanurat eingesetzt werden, wobei Glycerin und Trimethylolpropan bevorzugt sind.

Es können zusätzlich auch einwertige Alkanole und Säuren mit verwendet werden.

Erfindungsgemäß eingesetzte Polyetherpolyole werden nach dem Fachmann bekannten Herstellungsmethoden erhalten, wie beispielsweise durch anionische Polymerisation von einem oder mehreren Alkylenoxiden mit 2 bis 4 Kohlenstoffatomen mit Alkalihydroxiden, wie Natrium- oder Kaliumhydroxid, Alkalialkoholaten, wie Natriummethylat, Natrium- oder Kaliumethylat oder Kaliumisopropylat, oder aminischen Alkoxylierungs-Katalysatoren, wie Dimethylethanolamin (DMEOA), Imidazol und/oder Imidazolderivate, unter Verwendung mindestens eines Startermoleküls, das 2 bis 8, vorzugsweise 2 bis 6 reaktive Wasserstoffatome gebunden enthält.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt sind Copolymere des Propylenoxids mit Ethylenoxid. Die Alkylenoxide können in Kombination mit COz umgesetzt werden.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 2,2'-, 2,4'- und 4,4'-Diaminodiphenylmethan.

Vorzugsweise verwendet werden zwei oder mehrwertige Alkohole, wie Ethandiol, 1,2- und 1,3-Propandiol, Diethylenglykol, Dipropylenglykol, 1,4-Butandiol, 1,6-Hexandiol, Triethanolamin, Bisphenole, Glycerin, Trimethylolpropan, Pentaerythrit, Sorbit und Saccharose.

Verwendbare Polycarbonatpolyole sind Hydroxylgruppen aufweisende Polycarbonate, zum Beispiel Polycarbonatdiole. Diese entstehen in der Reaktion von Kohlensäurederivaten, wie Diphenylcarbonat, Dimethylcarbonat oder Phosgen, mit Polyolen, bevorzugt Diolen.

Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenole und lactonmodifizierte Diole der vorstehend genannten Art.

Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit COz erhältlich sind.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit 4 bis 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Neben organischen Dicarbonsäuren können auch Derivate dieser Säuren, beispielsweise deren Anhydride sowie deren Ester und Halbester mit niedermolekularen, monofunktionellen Alkoholen mit 1 bis 4 Kohlenstoffatomen eingesetzt werden. Der anteilige Einsatz der oben genannten biobasierten Ausgangsstoffe, insbesondere von Fettsäuren bzw. Fettsäurederivaten (Ölsäure, Sojaöl etc.) ist ebenfalls möglich und kann Vorteile aufweisen, z.B. im Hinblick auf Lagerstabilität der Polyolformulierung, Dimensionsstabilität, Brandverhalten und Druckfestigkeit der Schäume.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens bifunktionell, können aber gegebenenfalls auch Anteile höherfunktioneller, insbesondere trifunktioneller, Startermoleküle enthalten.

Startermoleküle sind zum Beispiel Diole wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol. Auch Startermoleküle mit von OH verschiedenen Funktionalitäten können allein oder in Mischung eingesetzt werden.

Neben den Diolen können als Startermoleküle für die Herstellung der Polyether auch Verbindungen mit mindestens 3 Zerewitinoff-aktiven Wasserstoffen, besonders mit zahlenmittleren Funktionalitäten von 3 bis 8, insbesondere von 3 bis 6 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole.

Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoff-aktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid.

Als Verbindungen mit gegenüber Isocyanaten reaktionsfähigen Wasserstoffatomen können auch Polymerpolyole, PHD-Polyole und PIPA-Polyole in Komponente **A1** eingesetzt werden. Polymerpolyole sind Polyole, die Anteile von durch radikalische Polymerisation geeigneter Monomere wie Styrol oder Acrylnitril in einem Basispolyol erzeugten festen Polymeren enthalten. PHD (Polyhydrazodicarbonamid)-Polyole werden beispielsweise hergestellt durch in situ Polymerisation eines Isocyanats oder einer Isocyanat-Mischung mit einem Diamin und/oder Hydrazin (bzw. Hydrazinhydrat) in einem Polyol, bevorzugt einem Polyetherpolyol. Bevorzugt wird die PHD-Dispersion hergestellt durch Umsetzung einer Isocyanat-Mischung aus 75 bis 85 Gew.-% 2,4-Toluylendiisocyanat (2,4-TDI) und 15 bis 25 Gew.-% 2,6-Toluylendiisocyanat (2,6-TDI) mit einem Diamin und/oder Hydrazinhydrat in einem Polyetherpolyol hergestellt durch Alkoxylierung eines trifunktionellen Starters (wie beispielsweise Glycerin und/oder Trimethylolpropan). Bei PIPA-Polyolen handelt es sich um durch Polyisocyanat-Polyaddition mit Alkanolaminen-modifizierte Polyetherpolyole, wobei das Polyetherpolyol bevorzugt eine Funktionalität von 2,5 bis 4,0 und eine Hydroxylzahl von 3 mg KOH/g bis 112 mg KOH/g (Molekulargewicht 500 g/mol bis 18000 g/mol) aufweist.

Isocyanat-reaktive Substanzen mit zellöffnender Wirkung können Copolymere aus Ethylenoxid und Propylenoxid mit einem Überschuss an Ethylenoxid oder aromatischen Diamine wie Diethyltoluendiamin sein.

Neben den oben beschriebenen Isocyanat-reaktiven Verbindungen können in der Komponente **A1** beispielsweise Graft-Polyole, Polyamine, Polyaminoalkohole und Polythiole enthalten sein. Die beschriebenen Isocyanat-reaktiven Komponenten umfassen auch solche Verbindungen mit gemischten Funktionalitäten.

Für die Herstellung von Polyurethanschaumstoffen im Kaltschaumverfahren werden bevorzugt mindestens zwei Hydroxylgruppen aufweisenden Polypropylenoxid-Polyethylenoxid-BlockCopolymere mit einer OH-Zahl von 20 bis 50 mg KOH/g eingesetzt, wobei die OH-Gruppen zu mindestens 80 Mol-% aus primärem OH-Gruppen bestehen (Bestimmung mittels $^1$H-NMR (z.B. Bruker DPX 400, Deuterochloroform)). Besonders bevorzugt beträgt die OH-Zahl 25 bis 40 mg KOH/g, ganz besonders bevorzugt 25 bis 35 mg KOH/g.

Gegebenenfalls werden zusätzlich in der Komponente **A1** Verbindungen mit mindestens zwei gegenüber Isocyanaten reaktionsfähigen Wasserstoffatomen und einer OH-Zahl von 280 bis 4000 mg KOH/g, bevorzugt 400 bis 3000 mg KOH/g, besonders bevorzugt 1000 bis 2000 mg KOH/g eingesetzt. Hierunter sind Hydroxylgruppen und/oder Aminogruppen und/oder Thiolgruppen und/oder Carboxylgruppen aufweisende Verbindungen zu verstehen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispielsweise können Ethanolamin, Diethanolamin, Sorbit und/oder Glycerin eingesetzt werden.

Die Komponente **A1** kann aus einer oder mehreren der oben genannten Isocyanat-reaktiven Komponenten bestehen, bevorzugt enthält die Komponente **A1** mindestens zwei Hydroxylgruppen aufweisenden Polyether, gegebenenfalls in Mischung mit mindestens zwei Hydroxylgruppen aufweisenden Polyestern.

In einer bevorzugten Ausführungsform enthält die Komponente **A1**:

**A1.1** gegenüber Isocyanaten reaktionsfähige Wasserstoffatome aufweisende Verbindung(en) mit einer NH-Zahl gemäß DIN 53176 in der Fassung von November 2002 und/oder OH-Zahl gemäß DIN 53240-1 in der Fassung von Juni 2013 von 15 bis < 320 mg KOH/g, bevorzugt 15 - 120 mg KOH/g und besonders bevorzugt 15 - 50 mg KOH/g, gegebenenfalls

**A1.2** gegenüber Isocyanaten reaktionsfähige Wasserstoffatome aufweisende Verbindungen mit einer NH-Zahl gemäß DIN 53176 in der Fassung von November 2002 und/oder OH-Zahl gemäß DIN 53240-1 in der Fassung von Juni 2013 von 120 bis 600 mg KOH/g,
und gegebenenfalls

**A1.3** gegenüber Isocyanaten reaktionsfähigen Wasserstoffatomen aufweisenden Verbindungen mit einer NH-Zahl gemäß DIN 53176 in der Fassung von November 2002 und/oder OH-Zahl gemäß DIN 53240-1 in der Fassung von Juni 2013 von 600 bis 4000 mg KOH/g.

wobei der Anteil der Polymeren in der Summe der Komponenten A1 mindestens 50 Gew.-% bevorzugt mindestens 67 Gew.-% beträgt.

In einer weiteren bevorzugten Ausführungsform enthält die Komponente A mindestens 30 Gew.-%, bezogen auf das Gesamtgewicht der Komponente **A1**, mindestens eines Polyoxyalkylen-Copolymers, bestehend aus einem Starter, Propylenoxid und Ethylenoxid und einem Endblock aus Ethylenoxid, wobei das Gesamtgewicht der Endblöcke aus Ethylenoxid im Mittel 3 - 30 Gew.-%, bevorzugt 10-20 Gew.-%, bezogen auf das gesamte Gewicht aller Polyoxyalkylen-Copolymere beträgt.

**Komponente A2**

Erfindungsgemäß wird als Komponente **A2** ein halogenfreies Treibmittel wie ein chemisches und/oder physikalisches halogenfreies Treibmittel eingesetzt.

Als chemisches Treibmittel **A2.1** werden beispielsweise Wasser oder Carbonsäuren und deren Gemische verwendet. Diese reagieren mit Isocyanatgruppen unter Bildung des Treibgases, wie beispielsweise im Falle von Wasser entsteht dabei Kohlendioxid und im Falle von z. B. Ameisensäure entsteht dabei Kohlendioxid und Kohlenstoffmonoxid.

Als Carbonsäure wird bevorzugt mindestens eine Verbindung, ausgewählt aus der Gruppe bestehend aus Ameisensäure, Essigsäure, Oxalsäure und Ricinolsäure, eingesetzt. Ebenfalls können Addukte von CO2 an primäre und sekundäre Amine (Salze der Carbaminsäure) als chemische Treibmittel eingesetzt werden. Als chemisches Treibmittel wird besonders bevorzugt Wasser eingesetzt.

Als physikalisches Treibmittel **A2.2** eingesetzt werden beispielsweise niedrig siedende organische Verbindungen wie z. B. Kohlenwasserstoffe, Ether, Ketone, Carbonsäureester, Kohlensäureester, halogenierte Kohlenwasserstoffe. Geeignet sind insbesondere organische Verbindungen, welche gegenüber der Isocyanatkomponente **B** inert sind und Siedepunkte unter 100 °C, vorzugsweise unter 50 °C bei Atmosphärendruck aufweisen. Diese Siedepunkte haben den Vorteil, dass die organischen Verbindungen unter dem Einfluss der exothermen Polyadditionsreaktion verdampfen. Beispiele derartiger, vorzugsweise verwendeten organischen Verbindungen sind Alkane, wie Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat. Auch Gemische zweier oder mehrerer der genannten organischen Verbindungen können verwendet werden. Die organischen Verbindungen können dabei auch in Form einer Emulsion aus kleinen Tröpfchen eingesetzt werden. Treibmittel, die die Ozonschicht schädigen können oder in besonderer Weise zur Klimaerwärmung beitragen können (GWP >20) werden nicht eingesetzt.

In einer besonderen Ausführungsform enthält die Komponente **A2**

**A2.1** 0,5 bis 5 Gew.-Teile (bezogen auf **A** = 100 Gew.-Teile) chemisches, halogenfreies Treibmittel und/oder

**A2.2** 0 bis 15 Gew.-Teile (bezogen auf **A** = 100 Gew.-Teile) physikalisches, halogenfreies Treibmittel

Besonders bevorzugt wird als Komponente **A2** Wasser eingesetzt.

In einer Ausführungsform des erfindungsgemäßen Verfahrens enthält die Komponente A2 0,8 bis 4,5 Gewichtsteile Wasser, bezogen auf die Summe der Gewichtsteile A1 + A2 = 100 Gewichtsteile enthält und wobei das Herstellungsverfahren bei einer Kennzahl von 50 bis 115, bevorzugt von 70 bis 115 erfolgt.

**Komponente A3**

Als Komponente **A3** werden Hilfs- und Zusatzstoffe verwendet wie

a) Katalysatoren (Aktivatoren),

b) oberflächenaktive Zusatzstoffe (Tenside), wie Emulgatoren und Schaumstabilisatoren insbesondere solche mit niedriger Emission wie beispielsweise Produkte der Tegostab® LF-Serie,

c) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Flammschutzmittel, (wie beispielsweise Trikresylphosphat), Stabilisatoren gegen Alterungs- und Witterungseinflüsse, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Als Katalysatoren werden bevorzugt aliphatische tertiäre Amine (beispielsweise Bis(dimethylaminoethyl)ether, Pentamethyldiethylentriamin), cycloaliphatische tertiäre Amine (beispielsweise 1,4-Diaza(2,2,2)bicyclooctan), aliphatische Aminoether (beispielsweise Dimethylaminoethylether und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff, Derivate des Harnstoffs (wie beispielsweise Aminoalkylharnstoffe), insbesondere (3-Dimethylaminopropylamin)-harnstoff) und Zinn-Katalysatoren (wie beispielsweise Dialkylzinnoxid, Dialkylzinndilaurat, Zinnoctoat). Katalysatoren, die als endokrine Disruptoren wirken wie Dibutylzinndilaurat, werden nicht eingesetzt.

Als Katalysatoren werden besonders bevorzugt (i) Harnstoff, Derivate des Harnstoffs und/oder (ii) die oben genannten Amine und Aminoether, dadurch gekennzeichnet, dass die Amine und Aminoether eine funktionelle Gruppe enthalten, die mit dem Isocyanat chemisch reagiert. Vorzugsweise ist die funktionelle Gruppe eine Hydroxyl-Gruppe, eine primäre oder sekundäre Aminogruppe. Diese besonders bevorzugten Katalysatoren haben den Vorteil, dass diese ein stark reduziertes Migrations- und Emissionsverhalten aufweisen. Als Beispiele für besonders bevorzugte Katalysatoren seien genannt: (3-Dimethylaminopropylamin)-Harnstoff, 1,1'-((3-(dimethylamino)propyl)imino)bis-2-propanol, N-[2-[2-(dimethylamino)ethoxy]ethyl]-N-methyl-1,3-propanediamin und 3-Dimethylaminopropylamin und seine Derivate und die vergleichbaren Moleküle, bei denen die Dimethylaminogruppe entsprechend WO2022112157 durch eine Pyrroldingruppe ersetzt ist..

Erfindungsgemäß kann hierbei die Komponente A1, A2 und/oder A3 eine oder mehrere Verbindungen sein.

**Komponente B**

Als Komponente **B** werden aliphatische, cycloaliphatische, araliphatische, aromatische und heterocyclische Polyisocyanate eingesetzt, beispielsweise solche der Formel (II)

$$Q(NCO)_n \qquad (II)$$

in der

n für eine ganze Zahl zwischen 2 - 4, vorzugsweise 2 oder 3 steht,
und
Q für einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen steht.

Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise werden als Komponente **B** mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkem-MDI") eingesetzt.

Erfindungsgemäß kann hierbei die Komponente B eine oder mehrere Verbindungen sein.

In einer Ausführungsform des erfindungsgemäßen Verfahrens weist das Di- und/oder Polyisocyanat, bevorzugt das aromatische Di- und/oder Polyisocyanat der Komponente (B) eine Viskosität von weniger als 120 mPa s, bevorzugt von 10 mPa s bis <100 mPa s, besonders bevorzugt von 20 mPa s bis 80 mPa s bei 25 °C auf.

In einer Ausführungsforin des erfindungsgemäßen Verfahrens weist das Di- und/oder Polyisocyanat, bevorzugt das aromatische Di- und/oder Polyisocyanat, eine mittlere berechnete Funktionalität von mehr als 2,0, bevorzugt von 2,05 bis 2,40 auf.

In einer Ausführungsform des erfindungsgemäßen Verfahrens beträgt der Carbodiimid-Anteil des Di- und/oder Polyisocyanat weniger als 0,06 mol Carbodiimid und/oder Uretdionimin pro kg der Komponente B.

In einer alternativen Ausführungsform des erfindungsgemäßen Verfahrens weist das Di- und/oder Polyisocyanat, bevorzugt das aromatische Di- und/oder Polyisocyanat der Komponente (B) eine Viskosität von mehr als 120 mPa s, bevorzugt von >120 mPa s bis 1000 mPa s, besonders bevorzugt von 300 mPa s bis 800 mPa s bei 25 °C auf.

In einer Ausführungsform des erfindungsgemäßen Verfahrens ist das Di- und/oder Polyisocyanat, bevorzugt das aromatische Di- und/oder Polyisocyanat der Komponente (B) eine oder mehrere Verbindungen und wird ausgewählt aus 2,4- und 2,6-Toluylendiisocyanat, 4,4'- und 2,4'- und 2,2'-Diphenylmethandiisocyanat und Polyphenylpolymethylenpolyisocyanat, bevorzugt 4,4'- und 2,4'- und 2,2'-Diphenylmethandiisocyanat und Polyphenylpolymethylenpolyisocyanat.

In einer bevorzugten Ausführungsform des erfindungsgemäßen Verfahrens ist das Di- und/oder Polyisocyanat eine Mischung aus 4,4'- und 2,4'- und 2,2'-Diphenylmethandiisocyanat und Polyphenylpolymethylenpolyisocyanat und weist eine mittlere berechnete Funktionalität von mehr als 2,0, bevorzugt von 2,05 bis 2,40 auf.

In einer ganz bevorzugten Ausführungsform des erfindungsgemäßen Verfahrens ist das Di- und/oder Polyisocyanat eine Mischung aus 4,4'- und 2,4'- und 2,2'-Diphenylmethandiisocyanat und Polyphenylpolymethylenpolyisocyanat und weist eine mittlere berechnete Funktionalität von mehr als 2,0, bevorzugt von 2,05 bis 2,40 auf, wobei der Carbodiimid-Anteil Mischung weniger als 0,06 mol Carbodiimid und/oder Uretdionimin pro kg der Komponente B beträgt.

Ganz besonders bevorzugt wird als Komponente **B eine** Diphenylmethandiisocyanat-Mischung eingesetzt, bestehend aus

a) 45 bis 75 Gew.-% 4,4'-Diphenylmethandiisocyanat und
b) 10 bis 35 Gew.-% 2,2'-Diphenylmethandiisocyanat und/oder 2,4'-Diphenylmethandiisocyanat und
c) 15 bis 45 Gew.-% Polyphenylpolymethylenpolyisocyanat ("Mehrkem-MDI") und/oder 2,2'-, 2,4'-, 4,4'-Diphenylmethandiisocyanat-, und/oder pMDI-basierte Carbodiimide, Uretdione oder Uretdionimine.

In einer alternativen ganz besonders bevorzugten Ausführungsform wird als Komponente **B eine** Diphenylmethandiisocyanat-Mischung eingesetzt, bestehend aus

a) 40 bis 60 Gew.-% 4,4'-Diphenylmethandiisocyanat und
b) 10 bis 25 Gew.-% 2,2'-Diphenylmethandiisocyanat und/oder 2,4'-Diphenylmethandiisocyanat und
c) 30 bis 50 Gew.-% Polyphenylpolymethylenpolyisocyanat ("Mehrkem-MDI") und/oder 2,2'-, 2,4'-, 4,4'-Diphenylmethandiisocyanat-, und/oder pMDI-basierte Carbodiimide, Uretdione oder Uretdionimine.

**Komponente C**

In einer Ausführungsform des erfindungsgemäßen Verfahrens weist die Verbindung mit aktivierter Methylengruppe einen Schmelzpunkt von weniger als 130 °C, bevorzugt von -100 °C bis 130 °C, und besonders bevorzugt von -80 °C bis 90 °C auf.

In einer Ausführungsform des erfindungsgemäßen Verfahrens beträgt der molare Anteil der Verbindung mit aktivierter Methylengruppe von 0,005 mol/kg bis 0,150 mol/kg, bevorzugt von 0,020 mol/kg bis 0,060 mol/kg bezogen auf die Summe eingesetzten Massen der Komponenten (A) und (B).

In einer Ausführungsform des erfindungsgemäßen Verfahrens wird die die Verbindung mit aktivierter Methylengruppe der Komponente (A) und/oder (B), bevorzugt der Komponente (A) vor der Umsetzung zugesetzt. Hierbei können sich beim Zusetzen der Komponente C enthaltend die Verbindung mit aktivierter Methylengruppe zu Komponente B bekannterweise Amide bilden, welche auch vom erfindungsgemäßen Verfahren umfasst sind.

In einer Ausführungsform des erfindungsgemäßen Verfahrens enthält die Verbindung mit aktivierter Methylengruppe eine Sulfinylgurppe, Sulfonylgruppe und/oder eine Phosphonylgruppe, bevorzugt eine Sulfinylgruppe und/oder Sulfonylgruppe und besonders bevorzugt eine Sulfonylgruppe.

In einer bevorzugten Ausführungsform des erfindungsgemäßen Verfahrens enthält die Verbindung mit aktivierter Methylengruppe eine Sulfinylgurppe, Sulfonylgruppe und/oder eine Phosphonylgruppe angrenzend an die aktivierte Methylengruppe, bevorzugt eine Sulfinylgruppe und/oder Sulfonylgruppe angrenzend an die aktivierte Methylengruppe und besonders bevorzugt eine Sulfonylgruppe angrenzend an die aktivierte Methylengruppe.

In einer Ausführungsform des erfindungsgemäßen Verfahrens sind die Reste $R^1$ und $R^2$ der Verbindung mit aktivierter Methylengruppe nachfolgend definiert:

$$R^1 S(O)_n\text{-}R^3$$

ist

mit n = 1 oder 2;
$R^3$ eine substituierte Alkylgruppe, eine unsubstituierte Alkylgruppe, eine substituierte Arylgruppe oder unsubstituierte Arylgruppe, bevorzugt eine unsubstituierte oder substituierte Alkylgruppe,
$R^2$ -$NO_2$, -CN, -P(O)$R^4R^5$, -P(O)(O$R^4$)$R^5$, -P(O)(O$R^4$)(O$R^5$), -C(O)-O$R^6$, -C(O)-N$R^7R^8$, -C(O)-N$R^9$-N$R^{10}R^{11}$, -C(O)-N$R^{12}$-O$R^{13}$, -C(O)$R^{14}$ oder identisch mit $R^1$, bevorzugt - CN,
$R^4$, $R^5$, $R^6$, $R^{14}$ jeweils unabhängig voneinander eine substituierte oder unsubstituierte Alkylgruppe oder eine substituierte oder unsubstituierte Arylgruppe, bevorzugt eine unsubstituierte oder substituierte Alkylgruppe,
$R^7$, $R^8$, $R^9$, $R^{10}$, $R^{11}$, $R^{12}$, $R^{13}$ jeweils unabhängig voneinander Wasserstoff, eine substituierte oder unsubstituierte Alkylgruppe oder eine substituierte oder unsubstituierte Arylgruppe, bevorzugt eine unsubstituierte Alkylgruppe.

In einer bevorzugten Ausführungsform des erfindungsgemäßen Verfahrens ist die Verbindung mit aktivierter Methylengruppe eine oder mehrere Verbindungen und wird ausgewählt wird aus der Gruppe bestehend aus 2-(Methylsulfonyl)acetonitril, 2-(Ethylsulfonyl)acetonitril, 2-(Phenylsulfonyl)acetonitril, Methylsulfonylessigsäure, Methylsulfonylessigsäuremethylester, Methyl sulfonylessigsäureethylester, Methyl sulfonylessigsäurehydroxyethylester, Methylsulfonylessigsäurehydroxypropylester, Phenylsulfonylessigsäure, 3-Oxo-thiophen-1,1-dioxid, Dihydro-2H-thiopyran-3(4H)-one-1,1-dioxid, 1H-benzo[c][1,2]thiazin-4(3H)-one 2,2-dioxid, 2,3,3-Trimethylisothiazolidin-4-one 1,1-dioxid, Dihydro-5,5-diMethyl-2H-thiopyran-3(4H)-one-1,1-dioxid, N,N-Dimethyl-2-oxopropane-1-sulfonamid, 2,3-dihydro-1lambda6-thiophene-1,1,3-trion, 3,4-dihydro-1H-2lambda6-benzothiopyran-2,2,4-trion, Ethyl (diethyl phosphono)methanesulfonat, Diethoxyphosphorylmethylsulfinylbenzen, Phenyolsulfonylaessigsäureethylester, Methylmethansulfonylacetat, Methyl 2-sulfamoylacetat, Methyl 2-phenylsulfinylacetat, bevorzugt 2-(Methylsulfonyl)acetonitril, und 2-(Phenylsulfonyl)acetonitril.

In einer bevorzugten Ausführungsform der Erfindung betrifft die Erfindung ein Verfahren zur Herstellung von Polyurethanschaumstoffen, wobei die Komponente

**A** enthaltend

    **A1** Verbindungen mit gegenüber Isocyanaten reaktionsfähigen Wasserstoffatomen enthaltend

        **A1.1** 29,0 bis 99,0 Gew.-Teile (bezogen auf **A** = 100 Gew.-Teile) gegenüber Isocyanaten reaktionsfähigen Wasserstoffatomen aufweisenden Verbindungen mit einer NH- und/oder OH-Zahl gemäß DIN 53240-1 in der Fassung von Juni 2013 von 20 bis < 120 mg KOH/g,

        **A1.2** 0 bis 60 Gew.-Teile (bezogen auf **A** = 100 Gew.-Teile) gegenüber Isocyanaten reaktionsfähigen Wasserstoffatomen aufweisenden Verbindungen mit einer NH- und/oder OH-Zahl gemäß DIN 53240-1 in der Fassung von Juni 2013 von 120 bis < 600 mg KOH/g,

        **A1.3** 0 bis 10 Gew.-Teile (bezogen auf **A** = 100 Gew.-Teile) gegenüber Isocyanaten reaktionsfähigen Wasserstoffatomen aufweisenden Verbindungen mit einer NH- und/oder OH-Zahl gemäß DIN 53240-1 in der Fassung von Juni 2013 von 600 bis 4000 mg KOH/g,

    **A2** 1 bis 200 mmol pro kg der Komponenten **A** und **B,** bevorzugt 5 bis 50 mmol pro kg der Komponenten **A** und **B** mindestens einer Komponente **A2.1** oder **A2.2,** wobei

        **A2.1** eine oder mehrere C-H-acide Verbindungen der Formel (Ia) enthält

    **A3** Treibmittel, enthaltend

        **A3.1** 0,5 bis 5 Gew.-Teile (bezogen auf **A** = 100 Gew.-Teile) chemische Treibmittel wie Wasser und/oder

        **A3.2** 0 bis 15 Gew.-Teile (bezogen auf **A** = 100 Gew.-Teile) physikalische Treibmittel wie z. B. $CO_2$,

    und

    **A4** 0,5 bis 10 Gew.-Teile (bezogen auf A = 100 Gew.-Teile) Hilfs- und Zusatzstoffe wie

        a) Katalysatoren,

        b) oberflächenaktive Zusatzstoffe,

        c) Pigmente und/oder Flammschutzmittel,

mit

**B** Di- umgesetzt und/oder Polyisocyanaten mit einem Gehalt von **>60** Gew.-% bifunktionellen Isocyanaten, wird.

Ein weiterer Gegenstand der Erfindung ist auch eine Reaktionsmischung enthaltend die Komponente

    **A** enthaltend

        **A1**                                         mindestens einer Verbindung mit gegenüber Isocyanaten reaktionsfähigen Wasserstoffatomen

        **A2**                                         halogenfreies Treibmittel und gegebenenfalls

        **A3**                                         Hilfs- und Zusatzstoffe wie

        a)                                           Katalysatoren,

        b)                                           oberflächenaktive Zusatzstoffe,

        c)                                           Pigmente und/oder halogenfreie Flammschutzmittel,

        und

| C | mindestens eine Verbindung mit aktivierter Methylengruppe gemäß des erfindungsgemäßen Verfahrens. |
| --- | --- |

In einer Ausführungsform der Erfindung beträgt der molare Anteil der Verbindung mit aktivierter Methylengruppe von 0,01 mol/kg bis 0,15 mol/kg, bevorzugt von 0,01 mol/kg bis 0,07 mol/kg bezogen auf die Summe eingesetzten Massen der Komponenten (A).

Gegenstand der Erfindung ist auch ein Polyurethanschaumstoff, bevorzugt Polyurethan-Weichschaumstoff, erhältlich nach dem erfindungsgemäßen Verfahren. Zur Herstellung des Polyurethanweichschaumstoffs werden die Reaktionskomponenten nach dem an sich bekannten Einstufenverfahren, dem Prepolymerverfahren oder dem Semiprepolymerverfahren zur Umsetzung gebracht, wobei man sich oft maschineller Einrichtungen bedient.

Die Polyurethanschaumstoffe können als Form- oder auch als Blockschaumstoffe hergestellt werden, wobei die Formschaumstoffe heiß- oder auch kalthärtend hergestellt werden können.

In einer Ausführungsform der Erfindung weist der Polyurethanschaumstoff, bevorzugt Polyurethan-Weichschaumstoff eine Luftdurchlässigkeit nach ISO 7231:2010 von >0,30 dm$^3$/s und einem Druckverformungsrest (75%/22h/70°C) , nach DIN EN ISO 1856 in der Fassung von Januar 2008 mit 75% Druckverformung bei 70°C für 22h gemessen (Verfahren A), von <25% auf.

Gegenstand der Erfindung ist auch die Verwendung der erfindungsgemäßen Polyurethanstoffe, zur Herstellung von Möbelpolsterungen, Textileinlagen, Matratzen, Automobilsitzen, Kopfstützen, Armlehnen, Schwämmen, Schaumstofffolien zur Verwendung in Automobilteilen wie beispielsweise Dachhimmeln, Türseitenverkleidungen, Sitzauflagen und Bauelementen und können Kennzahlen von 60 bis 120, bevorzugt 70 bis 115 und Rohdichte von 4 bis 600 kg/m$^3$, bevorzugt 40 bis 130 kg/m$^3$ (Weichschaum) bzw. bevorzugt 15 bis 35 kg/m$^3$ (Halbhartschaum) aufweisen.

Unter der Isocyanat-Kennzahl (auch Kennzahl oder Isocyanat-Index genannt) wird der Quotient aus der tatsächlich eingesetzten Stoffmenge [Mol] an Isocyanatgruppen und der tatsächlich eingesetzten Stoffmenge [Mol] an Isocyanat-reaktiven Gruppen, multipliziert mit 100, verstanden:

$$\text{Kennzahl} = (\text{Mole Isocyanatgruppen} / \text{Mole Isocyanat-reaktive Gruppen}) * 100$$

Der NCO-Wert (auch: NCO-Gehalt, Isocyanatgehalt) wird bestimmt mittels EN ISO 11909:2007. Falls nicht anders angegeben, handelt es sich um die Werte bei 25°C.

**Beispiele**

Prüfmethoden:

Die Druckfestigkeit und Dämpfung der Schaumstoffe wurden in Anlehnung an DIN EN ISO 3386-1 in der Fassung von September 2010 in Aufschäumrichtung bestimmt und die Rohdichte gemäß DIN EN ISO 845 in der Fassung von Oktober 2009. Die Probenkörper hatten ein Volumen von 5x5x5 cm$^3$. Eine Vorkraft von 2 N wurde dabei eingestellt. Die Vorschubgeschwindigkeit betrug 50 mm/min.

Die Hydroxylzahl wurde gemäß DIN 53240-1 in der Fassung von Juni 2013 und die Luftdurchlässigkeit gemäß DIN EN ISO 7231 in der Fassung von Dezember 2010 bestimmt.

Der Druckverformungsrest (DVR) wurde gemäß DIN EN ISO 1856 in der Fassung von Januar 2008 mit 75% Druckverformung bei 70°C für 22h gemessen (Verfahren A).

Die Werte für die Zugfestigkeit und Bruchdehnung wurden bei 22°C und 48% relativer Luftfeuchte gemäß DIN EN ISO 1798 in der Fassung von April 2008 ermittelt.

Die Bestimmung der Aldehyd-Emissionen wurde in Anlehnung an die Technische Regel VDA 275 folgendermaßen durchgeführt:
In eine Glasflasche von einem Liter Volumen werden 25 Milliliter Wasser und 25 Milliliter einer Lösung von 0,3 mmol/Liter Dinitrophenylhydrazin (DNPH) in 3 mM phosphorsaurem Acetonitril gegeben. Der Gehalt an DNPH beträgt 7,5 $\mu$mol pro Flasche. Am Deckel wird eine Schaumstoffplatte der Größe 40x10x4 cm$^3$ frei hängend befestigt so dass der Schaumstoff weder mit der wässrigen Lösung am Boden der Flasche noch mit den Wänden der Flasche in Kontakt ist. Die Flasche wird verschlossen und 3 Stunden in einen Umlufttrockenschrank bei 65 °C gelagert. Die Flasche wird auf Raumtemperatur abgekühlt, der Schaumstoff entnommen und die Zusammensetzung der wässrigen Lösung per LC-MS/MS auf die Hydrazone der unten angegebenen Aldehyde und ggf. andere Substanzen hin analysiert. Zu jeder Schaumqualität werden drei Flaschen untersucht. Bei jedem Versuchslauf werden drei Flaschen ohne Schaumstoff mit untersucht. Der mittlere Blindwert wird von den Messwerten abgezogen. Auf dieser Basis wird auf die Emission der jeweiligen Aldehyde pro Kilogramm Schaumstoff zurückgerechnet. Die Angabe erfolgt in mg Aldehyd pro kg Schaumstoff.

Die Messung der VOC- und FOG-Werte erfolgte gemäß der Technischen Regel VDA 278 des Verbandes der Automobilindustrie "Thermodesorptionsanalyse organischer Emissionen zur Charakterisierung von nichtmetallischen Kfz-Werkstoffen" in der Fassung von Oktober 2011.

**Beschreibung der Versuche**

Rohstoffe

| | |
|---|---|
| A1.1-1: | Polyalkylenoxid gestartet auf Propylenglycol und Glyzerin in einem molaren Verhältnis von 1:1 mit einer OH-Zahl von 32 mg KOH/g und einem Gehalt an Ethylenoxid von im Mittel 16 Gew.-% |
| A1.1-2: | Als Zellöffner genutztes Glyzerin-gestartetes Polyalkylenoxid mit einer OH-Zahl von 37 mg KOH/g und einem Gehalt an Ethylenoxid von $\geq$ 50 Gew.-% |
| A1.3-1: | Triethanolamin als Vernetzer |
| A2.1-1: | Wasser |
| A3-1: | Schaumstabilisator Tegostab® B8734 LF2 (Handelsprodukt der Firma Evonik) |
| A3-2: | Katalysator-Mischung aus Jeffcat® DPA (Handelsprodukt der Firma Huntsman) und Dabco® NE 300 (Handelsprodukt der Firma Evonik) im Verhältnis 8:1 (nach Gewicht) |
| A3-3: | Schwarzpaste N (Fa. ISL-Chemie) |
| B-1: | Gemisch aus MDI-Isomeren und Homologen mit einer Dichte von 1,24 kg/l, einem Isocyanat-Gehalt von 323 g/kg und einer Viskosität von 54 mPas. Es besteht zu 60 Gew.-% aus 4,4'-MDI, 11,5 Gew.-% 2,4'-MDI, 1,5 Gew.-% aus 2,2'-MDI. Der Rest wird von höheren Homologen des MDI gebildet. |
| C-1: | 2-(Phenylsulfonyl)acetonitril $C_6H_5$-$SO_2$-$CH_2$-CN ($R^1$ = Phenyl, Z = CN), CAS 7605-28-9 |
| C-2: | 2-(Methylsulfonyl)acetonitril $CH_3$-$SO_2$-$CH_2$-CN ($R^1$ = Methyl, Z = CN), CAS 2274-42-2 |
| V-3: | Trimethyl phosphonoacetat (X = Y = Methyl, Z = $COOCH_3$), CAS 5927-18-4 |
| V-1: | Cyanacetamid, CAS 107-91-5 |
| V-2: | Nitroessigsäureethylester, CAS 626-35-7 |
| A1.1-1 und A1.1-2 | sind Polymere im Sinne der Verordnung EG 1907/2006 Artikel 3 Nr. 5. |

Herstellung von Polyurethan-Schaumstoffen:

Zur Herstellung der Polyurethan-Schaumstoffe werden die notwendigen Mengen der Komponente A (Polyolmischung A, das entsprechende Additiv und gegebenenfalls Diethanolamin) in einem Pappbecher mit Blechboden (Volumen: ca. 850 ml) vorgelegt und mit einem Rührwerk (Fa. Pendraulik) mit Standardrührscheibe (d = 64 mm) bei 4200 U/min 45 Sekunden lang mit Luft beladen.

**Tabelle 1: Polyolmischung A**

| Komponente | Einsatzmenge |
|---|---|
| | Gew.-Tle. |
| A1.1-1 | 89,29 |
| A1.1-2 | 3,50 |
| A1.3-1 | 0,61 |
| A2.1-1 | 3,99 |
| A3-1 | 0,75 |
| A3-2 | 1,36 |
| A3-3 | 0,50 |
| **Polyolmischung A** | **100,00** |

Das Isocyanat B-1 wird in einen geeigneten Becher eingewogen und wieder entleert (Auslaufzeit: 3 s). Dieser, an den Innenwandungen noch benetzte Becher wird tariert und wieder mit der angegebenen Isocyanatmenge gefüllt. Das Isocyanat B-1 wird der Komponente A zugesetzt (Auslaufzeit: 3 s). Die erhaltene Mischung aus Isocyanat B-1 und den anderen Komponenten wird mit einem Rührwerk (Fa. Pendraulik) für 5 Sekunden intensiv vermischt. Ca. 93 Gramm des Reaktionsgemisches werden in eine 23°C warme mit Teflonfolie ausgekleidete Kastenform aus Aluminium mit 1,6 dm³ Volumen gegossen. Die Form wird verschlossen und verriegelt. Nach sechs Minuten wird die Verriegelung geöffnet und entspannt.

Alle Polyurethan-Schaumstoffe, die zu mechanischen Prüfungen herangezogen wurden, wurden nach der Herstellung 7 Tage in einem Abzug bei 20-23°C aufbewahrt.

Mechanische Charakterisierung der Polyurethan-Schaumstoffe

Die Stauchhärte wurde parallel zur Aufschäumrichtung bei 40% Stauchung gemessen. Eine Vorkraft von 2 kPa wurde dabei eingestellt. Die Vorschubgeschwindigkeit betrug 50 mm/min. In Tabelle 2 sind die mechanischen Eigenschaften der Polyurethan-Schaumstoffe dargestellt. Der Einsatz der erfindungsgemäßen Komponente C führt zu Polyurethan-Schaumstoffen mit guten mechanischen Eigenschaften. Die Verbindung mit aktivierter Methylengruppe C-1 und C-2 führen gegenüber dem Nullwert und gegenüber Cyanacetamid als Stand der Technik zu verbessertem Druckverformungsrest. Gegenüber dem Vergleich V-2 fällt auf, dass die Abweichung zum Nullwert bei Härte und bei der Randzonenverdichtung (Kernrohdichte/Gesamtrohdichte) deutlich geringer ist.

**Tabelle 2: Mechanische Eigenschaften**

| | Einheit | 1* | 2* | 3* | 4 | 5 |
|---|---|---|---|---|---|---|
| Additiv | | Nullwert | V-1 | V-2 | C-1 | C-2 |
| R1 | | | $CONH_2$ | NOz | $SO_2C_6H_5$ | $SO_2CH_3$ |
| R² | | | CN | COzEt | CN | CN |
| Gehalt an Additiv | g/100 g A | 0 | 0,5 | 0,5 | 0,5 | 0,5 |
| | mmol/kg [2] | | 59 | 37 | 27 | 42 |
| Schmelzpunkt Additiv | °C | | 119 | < 20 | 112 | 84 |
| Protonenverschiebung des aktivierten Protons H1, H2 (Literaturangaben) | ppm vs. $SiMe_4$ | | 3,58 | 4,9-5,2 | 4,1[3] | 4,02[4] |
| Kennzahl | | 70 | 70 | 70 | 70 | 70 |
| Ge samtrohdichte | kg/m³ | 61,5 | 61,1 | 61,8 | 60,9 | 60,6 |
| Kernrohdichte | kg/m³ | 56,5 | 55,0 | 53,6 | 55,3 | 55,9 |
| Kernrohdichte/ Gesamtrohdichte | % | 92 | 90 | 87 | 91 | 92 |
| Druckfestigkeit | kPa | 3,7 | 3,6 | 4,4 | 3,8 | 4,1 |
| Druckfestigkeit quadratisch korrigiert auf 55 kg/m³ | kPa | 3,5 | 3,6 | 4,7 | 3,8 | 3,9 |
| Dämpfung | % | 26 | 26 | 24 | 25 | 25 |
| Druckverformungsrest 75%/22h/70°C | % | 54 | 25 | 9 | 12 | 13 |
| Luftdurchlässigkeit (ISO 7231:2010) | dm³/s | 0,45 | 0,40 | 0,66 | 0,54 | 0,46 |

\* Vergleichsversuch

[1] Gibt das Mischungsverhältnis der Gewichtssumme der Komponente A ("Polyol") zum Isocyanat B-1 ("Isocyanat") an, bezogen auf "Polyol" = 100 Gew.-Teile.

[2] Bezogen auf mmol des Additivs pro kg der Summe der Massen der Komponenten **A** und **B.**

[3] G. Bram et al., Synthesis 1987(1), Seite 56-59

[4] W. Tang, J.Am.Chem.Soc, 2015, 137, 18, 5980-5989, Supporting Information Seite S14, 2-(Methylsulfonyl)acetonitril (13)

Messung der Emissionen

Die Additive weisen unterschiedliche Profile auf bezüglich ihrer Wirksamkeit gegen Aldehydemissionen und bezüglich der Gesamtemission von flüchtigen Substanzen. Es ist im industriellen Interesse, hier eine abwägende Auswahl treffen zu können.

**Tabelle 3: Aldehyd-Emissionen**

Die Nullwerte ohne Additiv wurden zu 4,6 mg Formaldehyd/kg Schaumstoff, bei 0,6 mg Acetaldehyd/kg Schaumstoff, bei 1,3 mg Acrolein/kg Schaumstoff. Die Emissionen von Propanal, Crotonal, 2-Methyl-2-butenal und Methacrolein lagen bei allen Versuchen < 0,3 mg/kg. Die folgende Tabelle beschreibt den Einfluss der Additive auf diese Werte, bezogen auf die Stoffmenge der aktiven Methylengruppen im eingesetzten Additivs.

*Vergleichsversuch; Abweichungen von ±0,1 mmol Aldehyd/ mol Additiv sind nicht als signifikante Abweichungen zu betrachten.

|  | Einheit | 2* | 3* | 4 | 5 |
|---|---|---|---|---|---|
| Additiv |  | V-1 | V-2 | C-1 | C-2 |
|  | Veränderung |  |  |  |  |
| Formaldehyd | mmol Aldehyd/ mol Additiv | -2,2 | +1,2 | -5,0 | -3,4 |
| Acrolein | mmol Aldehyd/ mol Additiv | -0,4 | -0,4 | -0,8 | -0,6 |

**Tabelle 4: Emissionen flüchtiger Kohlenwasserstoffe VOC nach VDA278**

|  | Einheit | 1* | 2* | 3* | 4 |
|---|---|---|---|---|---|
| Additiv |  | Nullwert | V-1 | V-2 | C-1 |
| VOC (Toluoläquivalente) | g/kg | 0,30 | 0,67 | 0,32 | 0,28 |
| davon Additiv | g/kg | 0 | 0,34 | 0 | 0,09 |
| davon Matrix | g/kg | 0,30 | 0,33 | 0,32 | 0,19 |

Die Methode ist nicht genauer als ±10%. Werte zwischen 0,27 und 0,33 mg/kg sind nicht als Abweichung vom Nullwert zu betrachten.

**Patentansprüche**

1. Verfahren zur Herstellung von Polyurethanschaumstoffen durch Umsetzung der Komponenten

   **A** enthaltend

   **A1** mindestens einer Verbindung mit gegenüber Isocyanaten reaktionsfähigen Wasserstoffatomen
   **A2** halogenfreies Treibmittel
   und gegebenenfalls
   **A3** Hilfs- und Zusatzstoffe wie

   a) Katalysatoren,
   b) oberflächenaktive Zusatzstoffe,
   c) Pigmente und/oder halogenfreie Flammschutzmittel,

   mit
   **B** mindestens einem Di- und/oder Polyisocyanat, bevorzugt einem aromatischen Di- und/oder Polyisocyanat, und
   **C** mindestens einer Verbindung mit aktivierter Methylengruppe, wobei diese eine Struktur gemäß Formel (I) aufweist:

$$R^1-CH(1)H(2)-R^2 \qquad (I),$$

mit

H(1), H(2) aktivierte Protonen der Verbindung mit aktivierter Methylengruppe sind,
$R^1$ und/oder $R^2$ organische oder anorganische Gruppe enthaltend eine Atom-Sauerstoff-Doppelbindung und/oder Atom-Stickstoff-Doppelbindung und/oder Atom-Stickstoff-Dreifachbindung, bevorzugt eine Atom-Sauerstoff-Doppelbindung, welche mit den Protonen H(1), H(2) eine enolisierbare Gruppe bilden,

wobei das aktivierte Proton (H1) und/oder das aktivierte Proton (H2) eine Protonenverschiebung in der $^1$H-Kernresonanz-Spektroskopie von 3,9 ppm bis 4,8 ppm, bevorzugt von 4,0 ppm bis 4,7 ppm, und besonders bevorzugt von 4,1 ppm bis 4,5 ppm aufweist, wobei die Protonenverschiebung in der $^1$H-Kernresonanz-Spektroskopie gegen Tetramethylsilan als Standard bei 20 °C in einer 5 Gew.-% Lösung in deuteriertem Chloroform (CDCl$_3$) gemessen wurde.

2. Verfahren gemäß, wobei die Verbindung mit aktivierter Methylengruppe einen Schmelzpunkt von weniger als 130 °C, bevorzugt von -100 °C bis 130 °C, und besonders bevorzugt von -80 °C bis 90 °C aufweist.

3. Verfahren gemäß Anspruch 1 oder 2, wobei der molare Anteil der Verbindung mit aktivierter Methylengruppe von 0,005 mol/kg bis 0,150 mol/kg, bevorzugt von 0,020 mol/kg bis 0,060 mol/kg bezogen auf die Summe eingesetzten Massen der Komponenten (A) und (B) beträgt.

4. Verfahren gemäß einem der Ansprüche 1 bis 3, wobei die Verbindung mit aktivierter Methylengruppe der Komponente (A) und/oder (B), bevorzugt der Komponente (A) vor der Umsetzung zugesetzt wird.

5. Verfahren gemäß einem der Ansprüche 1 bis 4, wobei die Verbindung mit aktivierter Methylengruppe eine Sulfinylgurppe, Sulfonylgruppe und/oder eine Phosphonylgruppe, bevorzugt eine Sulfinylgruppe und/oder Sulfonylgruppe und besonders bevorzugt eine Sulfonylgruppe enthält.

6. Verfahren gemäß einem der Ansprüche 1 bis 5 mit

$R^1 S(O)_n-R^3$ ist

mit n = 1 oder 2;
$R^3$ eine substituierte Alkylgruppe, eine unsubstituierte Alkylgruppe, eine substituierte Arylgruppe oder unsubstituierte Arylgruppe, bevorzugt eine unsubstituierte oder substituierte Alkylgruppe,

$R^2$ -NO$_2$, -CN, -P(O)R$^4$R$^5$, -P(O)(OR$^4$)R$^5$, -P(O)(OR$^4$)(OR$^5$), -C(O)-OR$^6$, -C(O)-NR$^7$R$^8$, -C(O)-NR$^9$-NR$^{10}$R$^{11}$, -C(O)-NR$^{12}$-OR$^{13}$, -C(O)R$^{14}$ oder identisch mit R$^1$, bevorzugt - CN

$R^4$, $R^5$, $R^6$, $R^{14}$ jeweils unabhängig voneinander eine substituierte oder unsubstituierte Alkylgruppe oder eine substituierte oder unsubstituierte Arylgruppe, bevorzugt eine unsubstituierte oder substituierte Alkylgruppe.
$R^7$, $R^8$, $R^9$, $R^{10}$, $R^{11}$, $R^{12}$, $R^{13}$ jeweils unabhängig voneinander Wasserstoff, eine substituierte oder unsubstituierte Alkylgruppe oder eine substituierte oder unsubstituierte Arylgruppe, bevorzugt eine unsubstituierte Alkylgruppe.

7. Verfahren gemäß einem der Ansprüche 1 bis 6, wobei die Verbindung mit aktivierter Methylengruppe eine oder mehrere Verbindungen ist und ausgewählt wird aus der Gruppe bestehend aus 2-(Methylsulfonyl)acetonitril, 2-(Ethylsulfonyl)acetonitril, 2-(Phenylsulfonyl)acetonitril, Methylsulfonylessigsäure, Methylsulfonylessigsäuremethylester, Methylsulfonylessigsäureethylester, Methylsulfonylessigsäurehydroxyethylester, Methylsulfonylessigsäurehydroxypropylester, Phenylsulfonylessigsäure, 3-Oxo-thiophen-1,1-dioxid, Dihydro-2H-thiopyran-3 (4H)-one-1,1-dioxid, 1H-benzo[c][1,2]thiazin-4(3H)-one 2,2-dioxid, 2,3,3-Trimethylisothiazolidin-4-one 1,1-dioxid, Dihydro-5,5-diMethyl-2H-thiopyran-3(4H)-one-1,1-dioxid, N,N-Dimethyl-2-oxopropane-1-sulfonamid, 2,3-dihydro-1lambda6-thiophene-1,1,3-trion, 3,4-dihydro-1H-2lambda6-benzothiopyran-2,2,4-trion, Ethyl (diethyl phosphono)methanesulfonat, Diethoxyphosphorylmethylsulfinylbenzen, Phenyolsulfonylaessigsäureethylester, Methylmethansulfonylacetat, Methyl 2-sulfamoylacetat, Methyl 2-phenylsulfinylacetat, bevorzugt 2-(Methylsulfonyl)acetonitril, und 2-(Phenylsulfonyl)acetonitril.

8. Verfahren gemäß einem der Ansprüche 1 bis 7, wobei die Komponente A2 0,8 bis 4,5 Gewichtsteile Wasser, bezogen auf die Summe der Gewichtsteile A1 + A2 = 100 Gewichtsteile enthält und wobei das Herstellungsverfahren bei einer Kennzahl von 50 bis 115, bevorzugt von 70 bis 115 erfolgt.

9. Verfahren gemäß einem der Ansprüche 1 bis 8, wobei das Di- und/oder Polyisocyanat, bevorzugt das aromatische Di- und/oder Polyisocyanat der Komponente (B) eine mittlere berechnete Funktionalität von mehr als 2,0, bevorzugt von 2,05 bis 2,40 aufweist.

10. Verfahren gemäß einem der Ansprüche 1 bis 9, wobei das Di- und/oder Polyisocyanat, bevorzugt das aromatische Di- und/oder Polyisocyanat der Komponente (B) eine oder mehrere Verbindungen ist und ausgewählt wird aus 2,4- und 2,6-Toluylendiisocyanat, 4,4'- und 2,4'- und 2,2'-Diphenylmethandiisocyanat und Polyphenylpolymethylenpolyisocyanat, bevorzugt 4,4'- und 2,4'- und 2,2'-Diphenylmethandiisocyanat und Polyphenylpolymethylenpoly-isocyanat.

11. Reaktionsmischung enthaltend die Komponente

   **A** enthaltend

   **A1** mindestens einer Verbindung mit gegenüber Isocyanaten reaktionsfähigen Wasserstoffatomen
   **A2** halogenfreies Treibmittel
   und gegebenenfalls
   **A3** Hilfs- und Zusatzstoffe wie

   a) Katalysatoren,
   b) oberflächenaktive Zusatzstoffe,
   c) Pigmente und/oder halogenfreie Flammschutzmittel,

   und
   **C** mindestens eine Verbindung mit aktivierter Methylengruppe gemäß einem der Ansprüche 1 bis 9.

12. Reaktionsmischung gemäß Anspruch 10, wobei der molare Anteil der Verbindung mit aktivierter Methylengruppe von 0,01 mol/kg bis 0,15 mol/kg, bevorzugt von 0,01 mol/kg bis 0,07 mol/kg bezogen auf die Summe eingesetzten Massen der Komponenten (A) beträgt.

13. Polyurethanschaumstoff, bevorzugt Polyurethan-Weichschaumstoff, erhältlich durch ein Verfahren gemäß einem der Ansprüche 1 bis 10.

14. Polyurethanschaumstoff, bevorzugt Polyurethan-Weichschaumstoff gemäß Anspruch 13, wobei der Polyurethanschaumstoff, bevorzugt Polyurethan-Weichschaumstoff eine Luftdurchlässigkeit nach ISO 7231:2010 von >0,30 dm$^3$/s und einem Druckverformungsrest (75%/22h/70°C) von <25% aufweist.

15. Verwendung der Polyurethanschaumstoffe gemäß Anspruch 13 oder 14 zur Herstellung von Möbelpolsterungen, Textileinlagen, Matratzen, Automobilsitzen, Kopfstützen, Armlehnen, Schwämmen, Schaumstofffolien zur Verwendung in Automobilteilen wie beispielsweise Dachhimmeln, Türseitenverkleidungen, Sitzauflagen und Bauelementen.

Europäisches
Patentamt

European
Patent Office

Office européen
des brevets

## EUROPÄISCHER RECHERCHENBERICHT

Nummer der Anmeldung

EP 23 20 4525

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 932 968 A1 (COVESTRO DEUTSCHLAND AG [DE]) 5. Januar 2022 (2022-01-05) | 14,15 | INV. C08G18/18 |
| A | * Absätze [0001], [0004] – [0006], [0040] – [0043], [0059]; Ansprüche; Beispiele; Tabellen 1, 2, 3 * | 1-13 | C08G18/32 C08G18/48 C08G18/66 C08G18/76 |
| A | ----- WO 2019/119196 A1 (HUNTSMAN INT LLC [US]; WU PENGFEI [CN] ET AL.) 27. Juni 2019 (2019-06-27) * Seite 1, Zeilen 4-5 * * Seite 2, Zeile 7 – Seite 3, Zeile 10 * * Seite 8, Zeile 19 – Seite 10, Zeile 9; Ansprüche; Beispiele * | 1-15 | C08K5/42 |
| A | ----- EP 1 002 816 A2 (AIR PROD & CHEM [US]) 24. Mai 2000 (2000-05-24) * Absätze [0001], [0017] – [0018], [0022], [0025] – [0034]; Ansprüche; Beispiele; Tabellen * | 1-15 | |
| A | ----- EP 1 099 718 A2 (AIR PROD & CHEM [US]) 16. Mai 2001 (2001-05-16) * Absätze [0001], [0011], [0013], [0016] – [0034]; Ansprüche; Beispiele; Tabellen * ----- | 1-15 | |

| RECHERCHIERTE SACHGEBIETE (IPC) |
|---|
| C08G |
| C08K |

Der vorliegende Recherchenbericht wurde für alle Patentansprüche erstellt

| Recherchenort | Abschlußdatum der Recherche | Prüfer |
|---|---|---|
| München | 26. März 2024 | Eigner, Markus |

**ANHANG ZUM EUROPÄISCHEN RECHERCHENBERICHT
ÜBER DIE EUROPÄISCHE PATENTANMELDUNG NR.**

EP 23 20 4525

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-03-2024

| Im Recherchenbericht angeführtes Patentdokument | | Datum der Veröffentlichung | Mitglied(er) der Patentfamilie | | Datum der Veröffentlichung |
|---|---|---|---|---|---|
| EP 3932968 | A1 | 05-01-2022 | CN | 113881015 A | 04-01-2022 |
| | | | EP | 3932968 A1 | 05-01-2022 |
| | | | EP | 3932969 A1 | 05-01-2022 |
| WO 2019119196 | A1 | 27-06-2019 | BR | 112020010407 A2 | 20-10-2020 |
| | | | CA | 3086084 A1 | 27-06-2019 |
| | | | CN | 111801365 A | 20-10-2020 |
| | | | EP | 3728373 A1 | 28-10-2020 |
| | | | JP | 7195321 B2 | 23-12-2022 |
| | | | JP | 2021507009 A | 22-02-2021 |
| | | | KR | 20200091929 A | 31-07-2020 |
| | | | RU | 2020122701 A | 20-01-2022 |
| | | | US | 2021221942 A1 | 22-07-2021 |
| | | | WO | 2019119196 A1 | 27-06-2019 |
| | | | WO | 2019121273 A1 | 27-06-2019 |
| EP 1002816 | A2 | 24-05-2000 | BR | 9905628 A | 28-11-2000 |
| | | | CN | 1254730 A | 31-05-2000 |
| | | | EP | 1002816 A2 | 24-05-2000 |
| | | | JP | 2000143761 A | 26-05-2000 |
| | | | KR | 20000035496 A | 26-06-2000 |
| | | | US | 6136876 A | 24-10-2000 |
| EP 1099718 | A2 | 16-05-2001 | BR | 0005245 A | 28-08-2001 |
| | | | CN | 1300792 A | 27-06-2001 |
| | | | DE | 60019066 T2 | 11-08-2005 |
| | | | EP | 1099718 A2 | 16-05-2001 |
| | | | JP | 2001163946 A | 19-06-2001 |
| | | | KR | 20010051616 A | 25-06-2001 |
| | | | US | 6248801 B1 | 19-06-2001 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB T276302011 A
- WO 2015082316 A1
- EP 2138520 A1
- WO 2017134296 A1
- EG 19072006
- WO 2022112157 A

**In der Beschreibung aufgeführte Nicht-Patentliteratur**

- *CHEMICAL ABSTRACTS*, 7605-28-9
- *CHEMICAL ABSTRACTS*, 2274-42-2
- *CHEMICAL ABSTRACTS*, 5927-18-4
- *CHEMICAL ABSTRACTS*, 107-91-5
- *CHEMICAL ABSTRACTS*, 626-35-7
- **G. BRAM et al.** *Synthesis*, 1987 (1), 56-59
- **W. TANG**. *J.Am.Chem.Soc*, 2015, vol. 137 (18), 5980-5989